# EUROPEAN PATENT APPLICATION

(11) **EP 4 357 260 A1**
(43) Date of publication of application: **24.04.2024**
(21) Application number: 23203288.8
(22) Date of filing: 12.10.2023
(51) Int. Cl.: B65B 43/42, B65B 61/24, B65G 33/06

(54) **INFEED CONVEYOR FOR A FOLDING APPARATUS, FOLDING APPARATUS HAVING AN INFEED CONVEYOR AND PACKAGING MACHINE HAVING A FOLDING APPARATUS**

(30) Priority: 18.10.2022 IT 202200021417
(71) Applicant: TETRA LAVAL HOLDINGS & FINANCE S.A., 1009 Pully (CH)
(72) Inventor: AMIMI, Amine, 41123 Modena (IT); CAVICCHIOLI, Ivan, 41123 Modena (IT)
(74) Representative: Tetra Pak - Patent Attorneys SE

(57) **Abstract**

There is described an infeed conveyor (30) configured to receive at a receiving station (33) semi-finalized packs (5) and to transfer the semi-finalized packs (5) to a transfer station (31). The infeed conveyor (30) comprises at least a first screw conveyor (35) having a spiral-shaped first screw blade (37) extending along a first central axis (B) and a second screw conveyor (36) having a spiral-shaped second screw blade (38) extending along a second central axis (C). The first screw blade (37) and the second screw blade (38) are spaced-apart from one another and each one extends at least from the receiving station (33) to the transfer station (31). The first screw blade (37) and the second screw blade (38) are configured to advance the semi-finalized packs (5) in cooperation with one another from the receiving station (33) to the transfer station (31) and during a rotation of the first screw blade (37) and the second screw blade (38) about respectively the first central axis (B) and the second central axis (C).

## Description

### TECHNICAL FIELD

The present invention relates to an infeed conveyor for a folding apparatus of semi-finalized packs of a pourable product, in particular a pourable food product.

Advantageously, the present invention also relates to a folding apparatus for folding semi-finalized packs of a pourable product, in particular a pourable food product, into finalized packages of the pourable product, in particular the pourable food product, and having an infeed conveyor.

Furthermore, the present invention also relates to a packaging machine for packaging a pourable product, in particular a pourable food product, into finalized packages and having a folding apparatus being provided with an infeed conveyor.

### BACKGROUND ART

As is known, many liquid or pourable food products, such as fruit juice, UHT (ultra-high-temperature treated) milk, wine, tomato sauce, etc., are sold in packages made of sterilized packaging material.

A typical example is the parallelepiped-shaped package for pourable food products known as Tetra Brik Aseptic (registered trademark), which is made by sealing and folding a laminated packaging material. The packaging material has a multilayer structure comprising a carton and/or paper base layer, covered on both sides with layers of heat-seal plastic material, e.g. polyethylene. In the case of aseptic packages for long-storage products, the packaging material also comprises a layer of oxygen-barrier material, e.g. an aluminum foil, which is superimposed on a layer of heat-seal plastic material, and is in turn covered with another layer of heat-seal plastic material forming the inner face of the package eventually contacting the food product.

Packages of this sort are normally produced on fully automatic packaging machines.

There are known packaging machines that advance a web of packaging material through a sterilization apparatus for sterilizing the web of packaging material and into an isolation chamber in which the sterilized web of packaging material is maintained and advanced. During advancement of the web of packaging material within the isolation chamber, the web of packaging material is folded and sealed longitudinally to form a tube, the tube being further fed along an (vertical) advancing direction. In order to complete the forming operations, the tube is filled with a pourable product, in particular a pourable food product, and is transversally sealed and subsequently cut along equally spaced transversal cross sections within a pack forming unit of the packaging machine during advancement along the advancing direction. Pillow packages are so obtained. These pillow packages define sealed semi-finalized packs having each a central main body and a plurality of flaps protruding from the central main body. In order to obtain the finalized packages, the pillow packages are further formed and the flaps are folded and sealed onto the respective central main bodies.

A typical packaging machine of this type comprises:
- a forming apparatus configured to form the semi-finalized packs being filled with the pourable product; and
- a folding apparatus configured to receive the semi-finalized packs from the forming apparatus and to form the finalized packages from the semi-finalized packs.

A typical folding apparatus comprises an infeed conveyor, which is configured to receive the semi-finalized packs from the forming apparatus and to feed the semi-finalized packs to a folding unit of the folding apparatus.

The infeed conveyor comprises a carrier for supporting the semi-finalized packs and a belt conveyor carrying a plurality of pushing elements. The belt conveyor is configured to advance the pushing elements along an advancement path such that the pushing elements direct the semi-finalized packs on the carrier along a feeding path when advancing along an operative portion of the advancement path.

The operation of the infeed conveyor must thereby guarantee a correct feeding of the semi-finalized packs to the folding unit. In particular, an operator must setup the infeed conveyor such that the pushing elements advance in a correct manner with respect to the semi-finalized packs. This shall ensure to avoid that the pushing elements are in advance with respect to the semi-finalized packs as such a case may result in the pushing elements getting below the semi-finalized packs possibly causing a jamming or to avoid that the pushing elements arrive too late, which again may lead to a non-correct feeding of the semi-finalized packs.

All this requires e.g. the need of well-trained operators and significant time efforts.

Thus, even though the known infeed conveyors work satisfyingly well, there is a need felt in the sector to further improve the known infeed conveyors.

### DISCLOSURE OF INVENTION

It is therefore an object of the present invention to provide an improved infeed conveyor.

It is a further object of the present invention to provide an improved folding apparatus.

It is an even further object of the present invention to provide an improved packaging machine.

According to the present invention, there is provided an infeed conveyor according to the independent claim.

Preferred embodiments are claimed in the dependent claims.

According to the present invention, there is also provided a folding apparatus according to claim 13.

According to the present invention, there is also provided a packaging machine according to claim 14.

### BRIEF DESCRIPTION OF THE DRAWINGS

A non-limiting embodiment of the present invention will be described by way of example with reference to the accompanying drawings, in which:
Figure 1 is a schematic view of a packaging machine having a folding apparatus provided with an infeed conveyor according to the present invention, with parts removed for clarity;
Figure 2 is a schematic representation of the transformation of a semi-finalized pack into a finalized package, with parts removed for clarity;
Figure 3 is an enlarged perspective view of the folding apparatus of Figure 1, with parts removed for clarity;
Figures 4, 5 and 6 are enlarged perspective views of the infeed conveyor of Figure 1 during different moments of the advancement of a semi-finalized pack, with parts removed for clarity;
Figure 7 is an enlarged interrupted view of a portion of the infeed conveyor of Figure 1, with parts removed for clarity.

### BEST MODES FOR CARRYING OUT THE INVENTION

Number 1 indicates as a whole a packaging machine for producing, preferentially sealed, finalized packages 2 of a pourable product, in particular a pourable food product such as pasteurized milk, fruit juice, wine, tomato sauce, yoghurt, milk drinks, yoghurt drinks, emulsions, beverages with pulp, salt, sugar and the like.

Preferentially, packages 2 are formed from a multilayer packaging material. Even more preferentially, packages 2 are formed from a web of packaging material 3.

The multilayer packaging material, preferentially web of packaging material 3, may have a multilayer structure (not shown).

More specifically, the multilayer packaging material, preferentially web of packaging material 3 may comprise at least a layer of fibrous material, such as e.g. a paper or cardboard layer, and at least two layers of heat-seal plastic material, e.g. polyethylene, interposing the layer of fibrous material in between one another. One of these two layers of heat-seal plastic material may define the respective inner face of finalized packages 2 eventually contacting the pourable product.

According to some possible non-limiting embodiments, the multilayer packaging material, preferentially web of packaging material 3, may also comprise a layer of gas- and light-barrier material, e.g. aluminum foil or ethylene vinyl alcohol (EVOH) film, in particular being arranged between one of the layers of the heat-seal plastic material and the layer of fibrous material. Preferentially, the multilayer packaging material, preferentially web of packaging material 3, may also comprise a further layer of heat-seal plastic material being interposed between the layer of gas- and light-barrier material and the layer of fibrous material.

In more detail, each finalized package 2 may extend along a longitudinal axis and has a longitudinal seam portion (extending along the respective longitudinal axis) and a pair of transversal sealing bands, in particular a transversal top sealing band and a transversal bottom sealing band. In particular, each finalized package 2 may have a substantially parallelepiped structure.

Furthermore, each finalized package 2 may comprise at least two transversal walls (being transversal to the respective longitudinal axis) and being disposed at opposite sides of finalized package 2 and a plurality of lateral walls extending between the transversal walls.

More specifically, one respective transversal wall of each finalized package 2 may define a bottom wall and the other respective transversal wall may define a top wall. Preferentially, the bottom wall may have a support surface adapted to be placed on a (horizontal) support, such as e.g. a shelf within a distribution point, and the top wall may be opposite to the bottom wall.

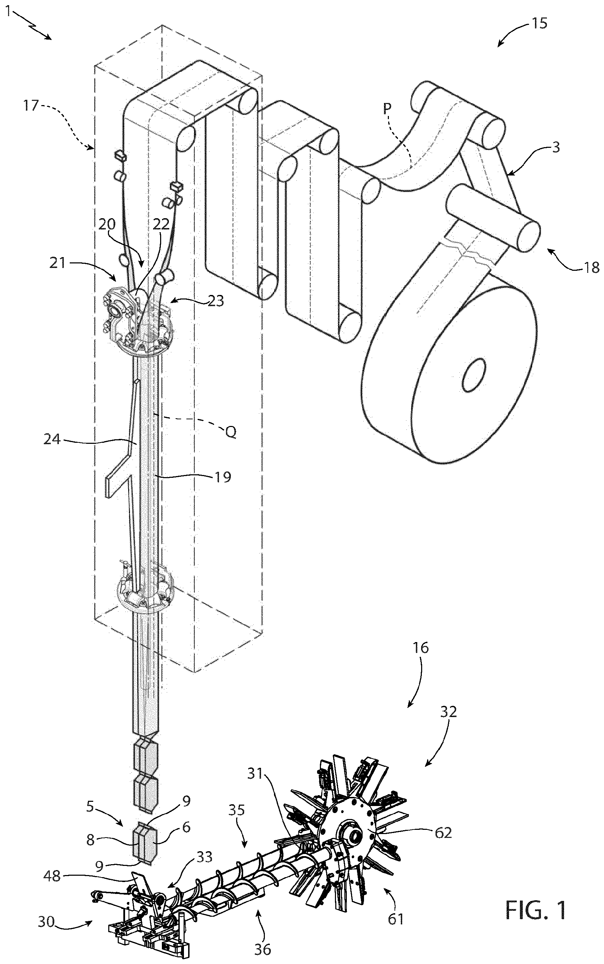

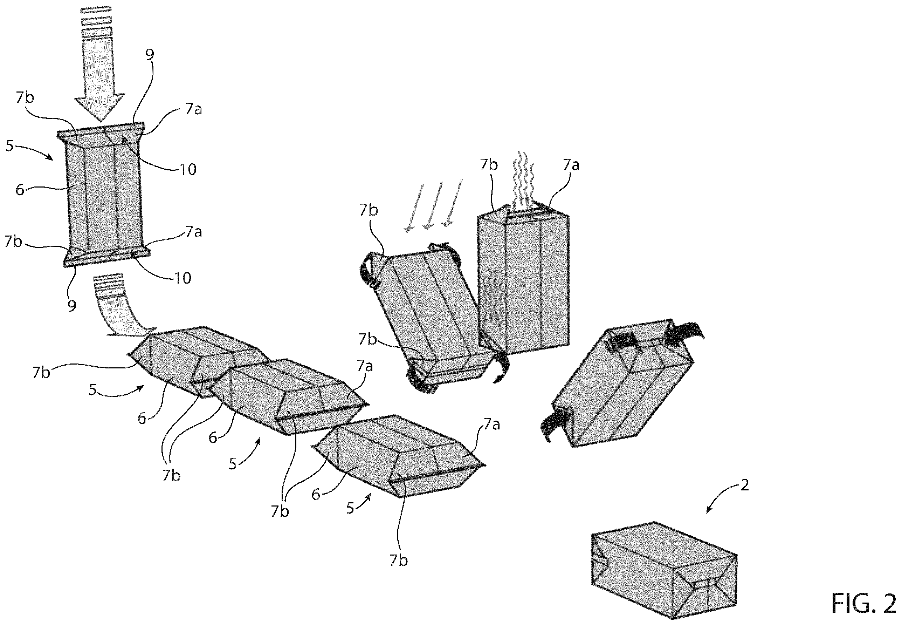

With particular reference to Figures 1 and 2, packaging machine 1 may be configured to produce (sealed) semi-finalized packs 5, such as e.g. pillow packs, being filled with the pourable product and to further treat and/or manipulate and/or form semi-finalized packs 5 for obtaining finalized packages 2. In use, at first semi-finalized packs 5 are produced by packaging machine 1 and then packaging machine 1 obtains packages 2 from semi-finalized packs 5.

With particular reference to Figure 2, each semi-finalized pack 5 may comprise at least a central main body 6 and one or more first flaps 7a and one or more second flaps 7b protruding away, preferentially protruding sideways, from central main body 6.

Preferentially, each semi-finalized pack 5 may comprise at least one pair of flaps comprising one first flap 7a and one second flap 7b extending from opposite lateral sides of the respective central body 6, preferentially extending from a respective transversal wall.

According to some possible non-limiting embodiments, each semi-finalized pack 5 may extend along a respective longitudinal axis A and may comprise a longitudinal sealing band 8 (being parallel to longitudinal axis A).

According to some possible non-limiting embodiments, each semi-finalized pack 5 may comprise at least one transversal sealing band 9, preferentially transversal to longitudinal axis A, arranged at a respective end portion 10 of the respective semi-finalized pack 5.

Preferentially, each semi-finalized pack 5 may comprise at least two transversal sealing bands 9, preferentially transversal to longitudinal axis A, arranged at respective end portions 10 of the respective semi-finalized pack 5 opposite to one another.

According to some preferred non-limiting embodiments, the respective transversal sealing bands 9 of each semi-finalized pack 5 may define transversal sealing bands of the respective finalized package 2 (obtained from the respective semi-finalized pack 5).

Preferentially, each longitudinal sealing band 8 may define a corresponding longitudinal seam portion of the respective finalized package 2 (obtained from the respective semi-finalized pack 5).

More specifically, each end portion 10 may taper from the respective central main body 6 to the respective transversal sealing band 9.

According to some preferred non-limiting embodiments, each end portion 10 may have at least one, preferentially exactly one, respective first flap 7a and at least one, preferentially exactly one, respective flap 7b.

Preferentially, each first flap 7a and the respective second flap 7b may be arranged at opposite lateral edges of the respective semi-finalized pack 5.

With particular reference to Figure 1, packaging machine 1 may comprise at least:
- a forming apparatus 15 configured to form and/or obtain semi-finalized packs 5 of the pourable product; and
- a folding apparatus 16 configured to receive the semi-finalized packs 5 from forming apparatus 15 and to form finalized packages 2 of the pourable product from semi-finalized packs 5.

In more detail, forming apparatus 15 may comprise:
- an isolation chamber 17 configured to separate an inner (sterile) environment from an outer (hostile) environment;
- a conveying device 18 configured to advance web of packaging material 3 along a web advancement path P at least to a tube forming station at which web of packaging material 3 is formed, in use, into a tube 19 and for advancing tube 19 along a tube advancement path Q;
- a tube forming and sealing device 20 at least partially arranged within isolation chamber 17 and configured to form and longitudinally seal tube 19 at the tube forming station within isolation chamber 17;
- a filling device 21 for filling tube 19 with the pourable product; and
- a pack forming unit configured to at least form and transversally seal tube 19, preferentially to also transversally cut tube 19, preferentially during advancement of tube 19 along tube advancement path Q, for obtaining and/or producing semi-finalized packs 5.

Preferentially, the pack forming unit may be arranged downstream of isolation chamber 17 and tube forming and sealing device 20 along tube advancement path Q.

Moreover, tube 19 may extend along a longitudinal axis, preferentially having a vertical orientation.

Furthermore, packaging machine 1 may further comprise a sterilization apparatus for sterilizing at least a portion of web of packaging material 3 at a sterilization station arranged upstream of the tube forming station along web advancement path P.

In more detail, filling device 21 may comprise at least a filling pipe 22 being in fluid connection or being controllable to be in fluid connection with a pourable product storage tank (not shown and known as such) and being, in use, partially placed within tube 19 for feeding the pourable product into the, in use, advancing tube 19.

More specifically, tube forming and sealing device 20 may comprise at least a tube forming assembly 23 configured to form tube 19 from web of packaging material 3, in particular by overlapping the respective opposite lateral edges of web of packaging material 3, and at least a sealing head 24 configured to longitudinally seal tube 19, in particular along the portion of tube 19 obtained by the overlapping of the opposite lateral edges of web of packaging material 3.

Even more specifically, tube forming assembly 23 and sealing head 24 may be arranged within isolation chamber 17.

According to some preferred non-limiting embodiments, the pack forming unit may comprise:
- a plurality of pairs of at least one operative assembly (not shown and known as such) and at least one respective counter-operative assembly (not shown and known as such); and
- a conveying unit (not shown and known as such) configured to advance the operative assemblies and the respective counter-operative assemblies along respective conveying paths.

More specifically, each operative assembly may be configured to cooperate, in use, with the respective counter-operative assembly of the respective pair for forming, transversally sealing, and preferentially also transversally cutting, tube 19 for obtaining one respective semi-finalized pack 5, in particular when, in use, advancing along a respective operative portion of the respective conveying path.

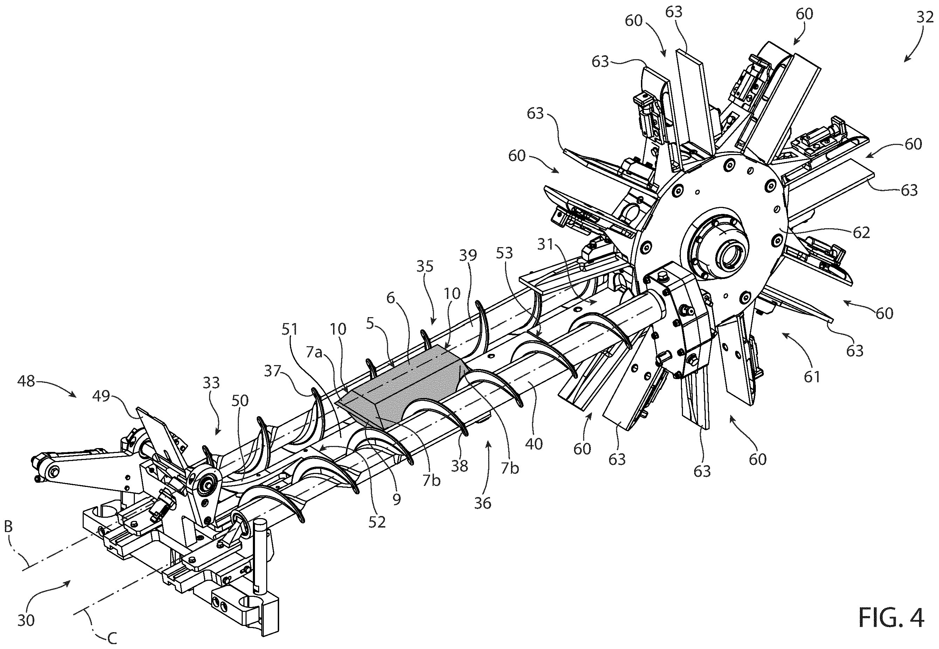

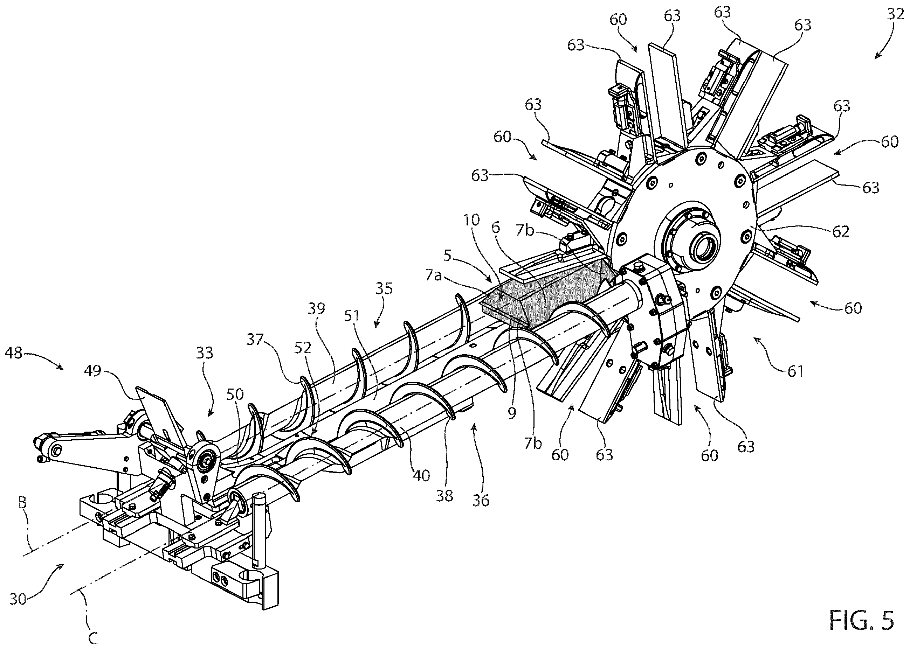

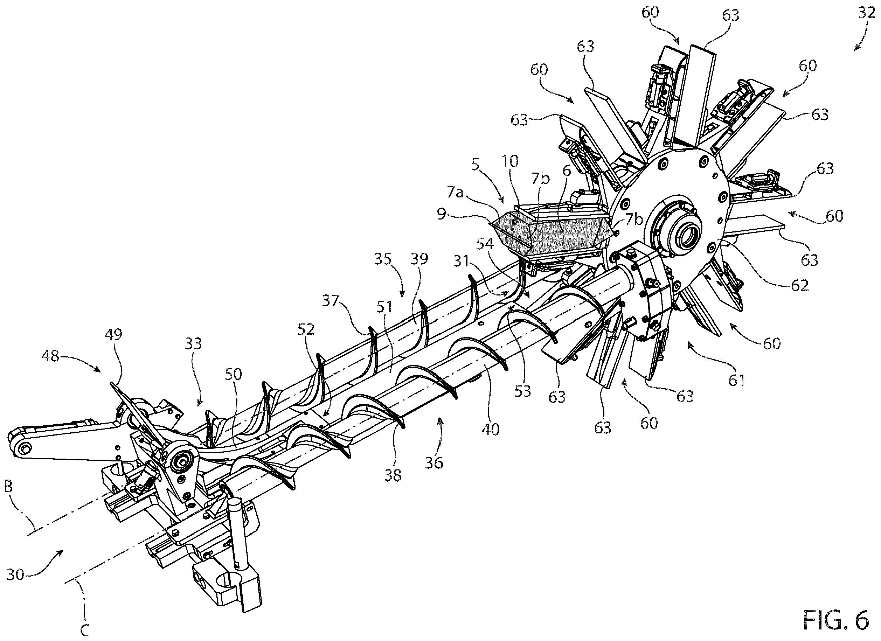

With particular reference to Figures 1 and 2 to 6, folding apparatus 16 may comprise at least:
- an infeed conveyor 30 configured to receive the semi-finalized packs 5, preferentially from forming apparatus 15, even more preferentially the pack forming unit, preferentially at a receiving station 33, and to feed semi-finalized packs 5 to a transfer station 31; and
- a folding unit 32 configured to receive the semi-finalized packs 5 from infeed conveyor 30 at transfer station 31 and to treat and/or manipulate semi-finalized packs 5 so as to obtain finalized packages 2 from the semi-finalized packs 5.

With particular reference to Figures 1 and 3 to 6, infeed conveyor 30 is configured to receive at receiving station 33 semi-finalized packs 5 from forming apparatus 15, preferentially the pack forming unit, and to advance semi-finalized packs 5 to transfer station 31, at which semi-finalized packs 5 are delivered to folding unit 32.

Infeed conveyor 30 may comprise a first screw conveyor 35 and a second screw conveyor 36 configured to advance in cooperation with one another semi-finalized packs 5 from receiving station 33 to transfer station 31.

In more detail, first screw conveyor 35 and second screw conveyor 36 may be spaced-apart from one another, preferentially along a transversal direction D1.

More specifically, first screw conveyor 35 may have respectively a spiral-shaped first screw blade 37 extending along a first central axis B and second screw conveyor 36 may have a spiral-shaped second screw blade 38 extending along a second central axis C.

Moreover, first screw blade 37 and second screw blade 38 may be rotatable about respectively first central axis B and second central axis C.

Advantageously, first screw blade 37 and second screw blade 38 may be configured to advance semi-finalized packs 5 in collaboration with one another from receiving station 33 to transfer station 31 and while rotating about respectively first central axis B and second central axis C.

According to some preferred non-limiting embodiments, first screw blade 37 may have a first pitch, preferentially a first constant pitch, and second screw blade 38 may have a second pitch, preferentially a second constant pitch. Preferentially, the first pitch and the second pitch may equal one another.

According to some preferred non-limiting embodiments, first screw blade 37 may have a first diameter, preferentially a first constant diameter, and second screw blade 38 may have a second diameter, preferentially a second constant diameter. Preferentially, the first diameter and the second diameter may equal one another.

In particular, the first diameter and the second diameter may be defined as the respective largest transversal dimension (with respect to respectively first central axis B and second central axis C) of respectively first screw blade 37 and second screw blade 38.

According to some preferred non-limiting embodiments, first screw blade 37 may comprise a first number of turns and second screw blade 38 may comprise a second number of turns. Preferentially, the first number of turns and the second number of turns may equal one another.

According to some preferred non-limiting embodiments, first screw blade 37 may have a first helix angle, preferentially a first constant helix angle, and second screw blade 38 may have a second helix angle, preferentially a second constant helix angle. Preferentially, the first helix angle and the second helix angle may equal one another.

In further detail, first screw conveyor 35 may comprise a first shaft 39 extending along first central axis B and integrally carrying first screw blade 37. Preferentially, first screw blade 35 may be coiled about first shaft 39.

Moreover, second screw conveyor 36 may comprise a second shaft 40 extending along second central axis C and integrally carrying second screw blade 38. Preferentially, second screw blade 38 may be coiled about second shaft 40.

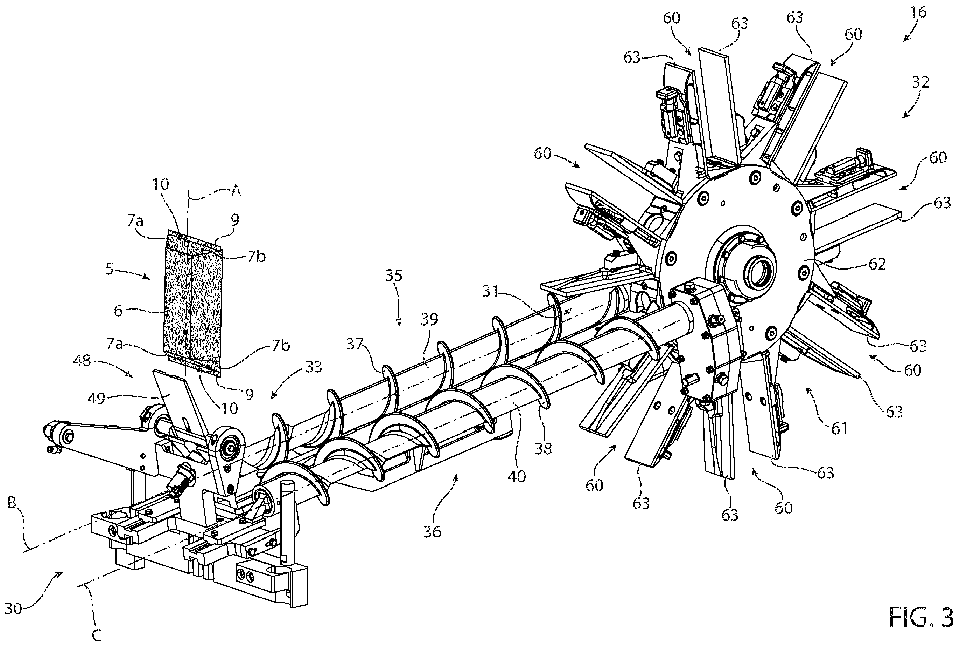

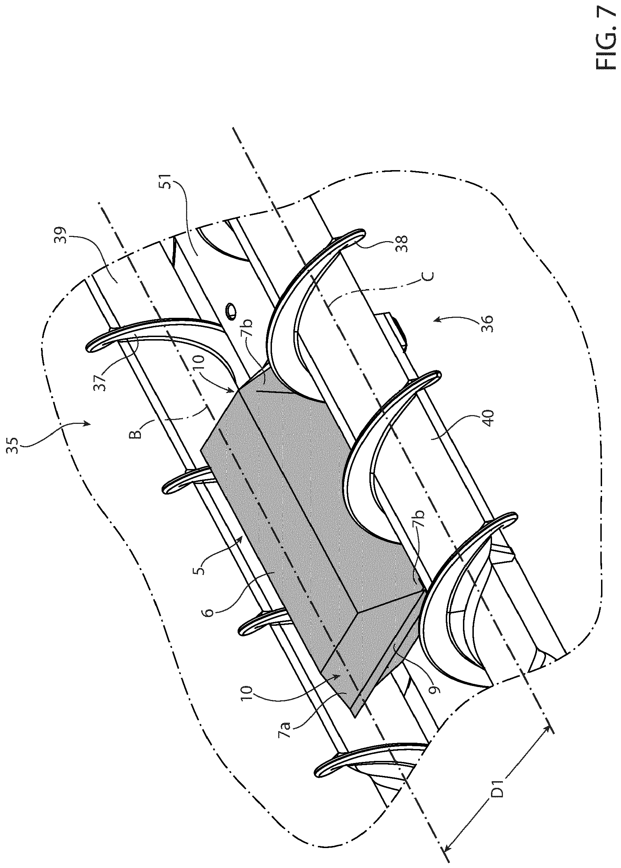

With particular reference to Figures 3 to 7, first screw blade 37 and second screw blade 38 are configured to interact with respectively the respective first flap 7a and the respective second flap 7b of each semi-finalized pack 5 such that rotation of first screw blade 37 and second screw blade 38 results in advancement of semi-finalized packs 5.

In more detail, each semi-finalized pack 5, when advancing from receiving station 33 to transfer station 31 presents a leading end corresponding to a respective end portion 10 and a trailing end corresponding to another respective end portion 10. Moreover, first screw blade 37 and second screw blade 38 are configured to interact with respectively the first flap 7a and the second flap 7b of the respective leading end of each semi-finalized pack 5 so as to advance semi-finalized packs 5.

According to some preferred non-limiting embodiments, at least a portion of each leading end of semi-finalized packs 5 may define the respective top wall of the respective finalized package 2.

In particular, first screw blade 37 and second screw blade 38 have respective helical shapes.

According to some preferred non-limiting embodiments, first central axis B and second central axis C may be parallel to one another.

According to some preferred non-limiting embodiments, first central axis B and second central axis C, i.e. first screw blade 37 (and in particular also first shaft 39) and second screw blade 38 (and in particular also second shaft 40), may be laterally distanced from one another along transversal direction D1, preferentially transversal direction D1 being perpendicular to first central axis B and second central axis C.

Preferentially, first screw blade 37 and second screw blade 38, and preferentially first shaft 39 and second shaft 40, are configured to advance and carry semi-finalized packs 5. In this way, no further elements (such as support walls, belts or the like) are required, which carry semi-finalized packs 5.

According to some preferred non-limiting embodiments, infeed conveyor 30 may also comprise an actuation device (not specifically shown) configured to actuate rotation of first screw blade 37, and preferentially first shaft 39, about the first central axis B and second screw blade 38, and preferentially second shaft 40, about second central axis C.

Preferentially, the actuation device may be operatively coupled to first screw blade 37, and preferentially first shaft 39, and second screw blade 38, and preferentially second shaft 40.

More specifically, the actuation device may be directly connected to first shaft 39 and second shaft 40 so as to control rotation of first shaft 39 and second shaft 40 about respectively first central axis B and second central axis C, thereby also controlling rotation of first screw blade 37 and second screw blade 38.

Preferentially, the actuation device may be configured to rotate first screw blade 37, and preferentially first shaft 39, about first central axis B at a first angular speed and to rotate second screw blade 38, and preferentially second shaft 40, about second central axis C at a second angular speed.

Even more preferentially, the actuation device may be configured such that the first angular speed and the second angular speed equal one another.

According to some possible non-limiting embodiments, the actuation device may comprise an electrical motor and a gear mechanism operatively coupling first screw blade 37, and preferentially first shaft 39, and second screw blade 38, and preferentially second shaft 40, to the electrical motor.

Alternatively, the actuation device may comprise a first electrical motor operatively coupled to first screw blade 37, and preferentially first shaft 39, and a second electrical motor operatively coupled to second screw blade 38, and preferentially second shaft 40.

According to some preferred non-limiting embodiments, infeed conveyor 30 may also comprise an adjustment device configured to allow for controlling the distance between first screw conveyor 35 and second screw conveyor 36 along transversal direction D1. In other words, adjustment device may be configured to allow for adjusting the distance between first screw blade 37 and second screw blade 38.

Having the adjustment device is of particular advantage during a format change, i.e. when switching from the production of finalized packages 2 having a certain size to the production of finalized packages 2 having another size.

With particular reference to Figures 1 and 3, infeed conveyor 30 may further comprise an inlet slide 48 configured to guide semi-finalized packs 5 to receiving station 33.

In more detail, at least portions of inlet slide 48 may be interposed between first screw conveyor 35 and second screw conveyor 36 and forming apparatus 15, preferentially the pack forming unit.

More specifically, inlet slide 48 may be configured to receive semi-finalized packs 5 from forming apparatus 15 and to guide semi-finalized packs 5 to first screw conveyor 35 and second screw conveyor 36.

In use, inlet slide 48 receives semi-finalized packs 5 falling by gravity towards inlet slide 48.

In more detail, inlet slide 48 may comprise a plate portion 49 interposed between first screw blade 37 and second screw blade 38 and forming apparatus 15.

Additionally, inlet slide 48 may comprise a pair of curved tracks 50 extending from plate portion 49 and towards a space formed between first screw blade 37 and second screw blade 38.

According to some possible non-limiting embodiments, infeed conveyor 30 may also comprise a supporting plate 51 interposed between first screw conveyor 35, preferentially first screw blade 37 and/or first shaft 39, and second screw conveyor 36, preferentially second screw blade 38 and/or second shaft 40.

Supporting plate 51 cooperates with first screw conveyor 35, preferentially first screw blade 37, and second screw conveyor 36, preferentially second screw blade 38, to support semi-finalized packs 5.

In some possible non-limiting embodiments infeed conveyor 30 is not provided with supporting plate 51. In this case, semi-finalized packs 51 are supported only by first screw conveyor 35, preferentially first screw blade 37, and second screw conveyor 36, preferentially second screw blade 38.

Preferentially, supporting plate 51 extends from a first station 52 adjacent to receiving station 33 to a second station 53 interposed between first station 52 and transfer station 31 so as to define a free space 54 between first screw conveyor 35, preferentially first screw blade 37 and/or first shaft 39, and second screw conveyor 36, preferentially second screw blade 37 and/or second shaft 40. In particular, free space 54 is not occupied by any other element.

In particular and as will be explained in more detail in the following, free space 54 allows the passage of portions of folding unit 32 through free space 54.

With particular reference to Figures 1 to 3, folding unit 32 may be configured to manipulate and/or process semi-finalized packs 5 so as to form and/or shape at least the respective central main bodies 6 (into the desired form and/or shape of the respective finalized package 2) and to seal first flaps 7a and second flaps 7b onto the respective central main body 6.

In more detail, folding unit 32 may comprise at least:
- a plurality of retaining pockets 60, each one configured to carry one respective semi-finalized pack 5 at a time; and a
- a conveying device 61 configured to advance retaining pockets 60 along an advancement path, preferentially an endless advancement path, more preferentially a circular endless advancement path.

In particular, conveying device 61 may be configured to advance retaining pockets 60 through transfer station 31 at which one semi-finalized pack 5 at a time is fed into a respective retaining pocket 60. Preferentially, conveying device 61 may also be configured to advance retaining pockets 60 through a release station at which finalized packages 2 formed form semi-finalized packs 5 during advancement within retaining pockets 60 are released out of retaining pockets 60.

According to some possible non-limiting embodiments, conveying device 61 may be configured to intermittently advance retaining pockets 60 along the advancement path.

In more detail, conveying device 61 may comprise a conveyor wheel 62 rotatable around a respective rotation axis.

Additionally, conveying device 61 may comprise an actuation unit configured to actuate rotation of conveyor wheel 62.

According to some possible non-limiting embodiments, the actuation unit and the actuation device may share the same electrical motor.

According to some possible non-limiting embodiments, each retaining pocket 60 may be delimited by a plurality of retaining plates 63 protruding from conveyor wheel 62.

Preferentially, free space 54 allows the passage of retaining plates 63.

According to some preferred non-limiting embodiments, folding unit 32 may comprise one or more treatment units configured to form and/or shape each central main body 6 and/or for folding and sealing first flaps 7a and second flaps 7b onto the respective central main body 6 (see Figure 2) during advancement of semi-finalized packs 5 through advancement of retaining pockets 60.

In use, packaging machine 1 forms finalized packages 2 filled with the pourable product.

In particular, the method of forming packages 2 comprises the main steps of:
- forming semi-finalized packs 5 by operation of forming apparatus 15; and
- folding semi-finalized packs 5 into finalized packages 2 by operation of folding apparatus 16.

In more detail, the main step of forming packs 5, comprises at least the steps of:
- advancing web of packaging material 3 along advancement path P, in particular by operation of conveying device 18;
- folding web of packaging material 3 into tube 19, in particular within isolation chamber 17, by operation of tube forming and sealing device 20, in particular tube forming assembly 23;
- longitudinally sealing tube 19, in particular within isolation chamber 17, by operation of tube forming and sealing device 20, in particular sealing head 24;
- filling tube 19 with the pourable product by operation of filling device 21, in particular filing pipe 22;
- advancing tube 19 along tube advancement path Q by operation of conveying device 18 and/or the pack forming unit; and
- obtaining semi-finalized packs 5 from tube 19 by forming, transversally sealing and transversally cutting tube 19 by operation of the pack forming unit and during advancement of tube 19 along tube advancement path Q.

Moreover, the step of forming may also comprise the step of sterilizing web of packaging material 3 at the sterilization station.

In more detail, the step of folding semi-finalized packs 5 comprises the sub-steps of:
- feeding semi-finalized packs 5 to folding unit 32 by operation of infeed conveyor 30; and
- final folding semi-finalized packs 5 by operation of folding unit 32.

More specifically, during the sub-step of feeding, rotation of first screw blade 37 and second screw blade 38 about respective first central axis B and second central axis C allows to advance semi-finalized packs 5 from receiving station 33 to transfer station 31.

Preferentially, during the sub-step of feeding, rotation of first screw blade 37 and second screw blade 38 is actuated by means of actuation device.

According to some preferred non-limiting embodiments, during the sub-step of feeding, first screw blade 37 and second screw blade 38 interact with respective first flaps 7a and second flaps 7b of semi-finalized packs 5 (see Figures 3 to 7).

According to some preferred non-limiting embodiments, semi-finalized packs 5 are delivered into respective retaining pockets 60 at transfer station 31. Accordingly, first screw blade 37 and second screw blade 38 advance semi-finalized packs 5 into the respective retaining pockets 60.

Additionally, during the step of feeding, the semi-finalized packs 5 are received from forming apparatus 15, in particular the pack forming unit. Possibly, semi-finalized packs 5 may be guided by inlet slide 48 to receiving station 33.

In more detail, during the step of final folding, the respective central main bodies 6 are formed and/or the respective first flaps 7a and second flaps 7b are folded and sealed onto the respective central main bodies 6 so as to form the finalized packages 2 from semi-finalized packs 5.

More specifically, during the step of final folding, semi-finalized packs 5 advance, preferentially intermittently advance, within respective retaining pockets 60 from transfer station 31 to the release station.

Moreover, during the step of final folding semi-finalized packs 5 may be treated by the one or more treatment units so as to obtain finalized packages 2.

The advantages of infeed conveyor 30 according to the present invention will be clear from the foregoing description.

In particular, infeed conveyor 30 comes along with a simple construction as it is only necessary to control first screw blade 37 and second screw blade 38.

Moreover, advancement of semi-finalized packs 5 does not require a precise placement of semi-finalized packs 5 onto first screw blade 37 and second screw blade 38. Semi-finalized packs 5 are automatically arranged in the correct way with respect to first screw blade 37 and second screw blade 38 due to their respective rotation.

Additionally, operation of first screw blade 37 and second screw blade 38 is insensitive to an initial speed of semi-finalized packs 5.

Clearly, changes may be made to infeed conveyor 30 and/or folding apparatus 16 and/or packaging machine 1 as described herein without, however, departing from the scope of protection as defined in the accompanying claims.

## Claims

1. Infeed conveyor (30) for a folding apparatus (16) of semi-finalized packs (5) containing a pourable product, the infeed conveyor (30) being configured to receive at a receiving station (33) the semi-finalized packs (5) from a forming apparatus forming the semi-finalized packs (5) and to transfer the semi-finalized packs (5) to a transfer station (31), at which the semi-finalized packs (5) are delivered to a folding unit (32) of the folding apparatus (16) ;
the infeed conveyor (30) comprises at least:
- a first screw conveyor (35) having a spiral-shaped first screw blade (37) extending along a first central axis (B); and
- a second screw conveyor (36) having a spiral-shaped second screw blade (38) extending along a second central axis (C);
wherein the first screw blade (37) and the second screw blade (38) are spaced-apart from one another and each one extends at least from the receiving station (33) to the transfer station (31);
wherein the first screw blade (37) and the second screw blade (38) are configured to advance the semi-finalized packs (5) in cooperation with one another from the receiving station (33) to the transfer station (31) and during a rotation of the first screw blade (37) and the second screw blade (38) about respectively the first central axis (B) and the second central axis (C).

2. Infeed conveyor according to claim 1, wherein each semi-finalized pack (5) comprises a central main body (6) and at least a first flap (7a) and a second flap (7b) protruding from an end portion (10) of the respective central main body (6);
wherein the first screw blade (37) is configured to interact with the respective first flap (7a) of each semi-finalized pack (5) and the second screw blade (38) is configured to interact with the respective second flap (7b) of each semi-finalized pack (5) such that rotation of the first screw blade (37) and second screw blade (38) results in advancement of the semi-finalized packs (5).

3. Infeed conveyor according to claim 1 or 2, wherein a first pitch and/or a first diameter and/or a first helical angle and/or a first number of turns of the first screw blade (37) equals, respectively, a second pitch and/or a second diameter and/or a second helical angle and/or a second number of turns of the second screw blade (38).

4. Infeed conveyor according to any one of the preceding claims, wherein the first central axis (B) and the second central axis (C) are parallel to one another.

5. Infeed conveyor according to any one of the preceding claims, and further comprising an actuation device configured to actuate rotation of the first screw blade (37) and the second screw blade (38) about respectively the first central axis (B) and the second central axis (C).

6. Infeed conveyor according to claim 5, wherein the actuation device is configured to rotate the first screw blade (37) and the second screw blade (38) about respectively the first central axis (B) and the second central axis (C) at the same angular speed.

7. Infeed conveyor according to claim 5 or 6, wherein the actuation device comprises an electrical motor and a gear mechanism operatively coupling the first screw blade (37) and the second screw blade (38) to the electrical motor; or
wherein the actuation device comprises a first electrical motor operatively coupled to the first screw blade (37) and a second electrical motor operatively coupled to the second screw blade (38).

8. Infeed conveyor according to any one of the preceding claims, wherein
the first screw conveyor (35) comprises a first shaft (39) extending along the first central axis (B) and integrally carrying the first screw blade (37); and
the second screw conveyor (36) comprises a second shaft (40) extending along the second central axis (C) and integrally carrying the second screw blade (38).

9. Infeed conveyor according to any one of the preceding claims, and further comprising an inlet slide (48) configured to guide the semi-finalized packs (5) to the receiving station (33).

10. Infeed conveyor according to any one of the preceding claims, and further comprising a supporting plate (51) interposed between the first screw conveyor (35) and the second screw conveyor (36).

11. Infeed conveyor according to claim 10, wherein the supporting plate (51) extends from a first station (52) adjacent to the receiving station (33) to a second station (53) interposed between the first station and the transfer station (31) thereby defining a free space (34) between the first screw conveyor (35) and the second screw conveyor (36).

12. Infeed conveyor according to any one of the preceding claims, and further comprising an adjustment device configured to allow for setting a distance between the first screw conveyor (35) and the second screw conveyor (36) along a direction (D1) transversal to the first central axis (B) and/or the second central axis (C).

13. Folding apparatus (16) for folding finalized packages from semi-finalized packs (5) filled with a pourable product comprising at least:
- an infeed conveyor (30) according to any one of the preceding claims; and
- a folding unit (32) configured to receive the semi-finalized packs (5) from the infeed conveyor (30) at the transfer station (31) and to treat and/or manipulate the semi-finalized packs (5) so as to obtain finalized packages (2) from the semi-finalized packs (5).

14. Packaging machine (1) for producing finalized packages (2) of a pourable product comprising at least:
- a forming apparatus (15) configured to form semi-finalized packs (5) of the pourable product; and
- a folding apparatus (16) according to claim 14 for forming the finalized packages (2) from the semi-finalized packs (5).
